**Europäisches Patentamt**

**European Patent Office**

**Office européen des brevets**

(11) Veröffentlichungsnummer: **0 228 622**
**A2**

## (12) EUROPÄISCHE PATENTANMELDUNG

(21) Anmeldenummer: **86117159.3**

(22) Anmeldetag: **09.12.86**

(51) Int. Cl.⁴: **G 05 B 15/02**

(30) Priorität: **12.12.85 DE 3543912**

(43) Veröffentlichungstag der Anmeldung:
**15.07.87 Patentblatt 87/29**

(84) Benannte Vertragsstaaten:
**AT BE CH DE FR GB IT LI NL**

(71) Anmelder: **Linde Aktiengesellschaft**
**Abraham-Lincoln-Strasse 21**
**D-6200 Wiesbaden(DE)**

(72) Erfinder: **Böckmann, Gerd**
**Kostheimer Landstrasse 17**
**D-6502 Mainz-Kostheim(DE)**

(72) Erfinder: **Bloch, Edwin**
**Einsteinstrasse 17**
**D-6090 Rüsselsheim(DE)**

(72) Erfinder: **Fischer, Peter**
**Panoramastrasse 49**
**D-6200 Wiesbaden(DE)**

(74) Vertreter: **Schaefer, Gerhard, Dr.**
**Linde Aktiengesellschaft Zentrale Patentabteilung**
**D-8023 Höllriegelskreuth(DE)**

(54) **Steuergerät.**

(57) Es wird ein Steuergerät zur Minimierung der Verbrauchszahlen elektrischer Verbraucher in einem Supermarkt mit einer Zentraleinheit 1 mit einem Mikroprozessor und einem damit verbundenen Bedienungsfeld 5 mit Anzeige beschrieben. Um weitere Energieeinsparungen und überdies eine Zentraltemperaturüberwachung und -anzeige zu ermöglichen, ist das Bedienungsfeld mit einem Mikroprozessor und je 16 frei belegbaren Ein- und Ausgängen ausgestattet und die Zentraleinheit 1 mit einem getakteten Netzteil 3 zur Spannungsversorgung verbunden

EP 0 228 622 A2

LINDE AKTIENGESELLSCHAFT

(K 105)

K 85/111
Sti/fl
11.12.1985

Steuergerät

Die Erfindung betrifft ein Steuergerät zur Minimierung der Verbrauchszahlen elektrischer Verbraucher in einem Supermarkt mit einer Zentraleinheit mit einem Mikroprozessor und einem damit verbundenen Bedienungsfeld mit Anzeige.

Die Energiekosten sind mittlerweile zu einem sehr beträchtlichen Faktor im Supermarktbereich geworden. Betrachtet man z.B. Supermärkte in der Größenordnung von 800 bis 1000 m² Verkaufsfläche, so erhält man folgende Werte für die Anteile an den Energiekosten: 75% Strom, 20% Heizung, 5% Wasser u.a..

Da der weitaus größte Teil der Stromkosten für die installierte Kälteanlage entsteht, sollte man hier versuchen, mit energiesparenden Maßnahmen die Kosten zu senken. In Linde-Berichte aus Technik und Wissenschaft, Nr. 56, 1984, Seite 49 bis 53 ist ein Steuergerät beschrieben, das den Anforderungen an Optimierung und Überwachungssystemen weitgehend entspricht. Das bekannte System garantiert einen ökonomischen Einsatz elektrischer Energie und eine maximale Sicherheit des Kühlgutes durch die Integration einer automatischen Warnung.

Das Gerät besteht aus einer Zentraleinheit, einer digitalen Schaltuhr, einer Input/Output-Karte und Netzteilen. Dabei ist die Zentraleinheit mit einer Mikroprozessorschaltung ausgestattet, an die 16 Digitalein- und Ausgänge angeschlossen sind, die durch eine programmierte Software miteinander verknüpft sind. Die elektronische, quarzstabilisierte Schaltuhr dient zur Synchronisation der internen Softwareuhr mit der aktuellen Tageszeit und zur Erfassung des Wochentages.

Das bekannte Steuergerät weist jedoch folgende Nachteile auf: Es ist nur eine beschränkte Belegung der Ein- und Ausgänge möglich; die Temperatur wird nicht angezeigt; vor Ausgabe einer Warnung ist das Erkennen eines Warnzustandes nicht möglich; der Mikroprozessor hat keine eigene Überwachung; die elektronische Schaltuhr dient lediglich zum Synchronisieren bzw. Starten von bestimmten Programmteilen; die Anzahl der Ausgangsrelais ist nur in 16er Blöcken möglich; es werden zwei Netzteile benötigt; der Programmieraufwand ist erheblich.

Aufgabe der vorliegenden Erfindung ist es, ein Steuergerät der eingangs genannten Art so auszugestalten, daß die erwähnten Nachteile überwunden werden.

Diese Aufgabe wird erfindungsgemäß dadurch gelöst, daß das Bedienungsfeld mit einem Mikroprozessor und je 16 frei belegbaren Ein- und Ausgängen ausgestattet ist und die Zentraleinheit mit einem getakteten Netzteil zur Spannungsversorgung verbunden ist.

Die Ausstattung des erfindungsgemäßen Steuergerätes mit 16 frei belegbaren Ein- und Ausgängen ermöglicht es, diese Ein- bzw. Ausgänge vollständig zur Steuerung bzw. Rückmeldung von Verdichterschützen, Magnetventilen und/oder elektrischen Verbrauchern zu belegen, wobei eine Sammelstörmeldung (Plus- bzw. Tiefkühlung) integriert ist, so daß keine Ausgänge mehr zur Warnung mehr belegt werden müssen. Ein Eingang ist dabei gesetzt, wenn ein anzuschließender potentialfreier Kontakt eine Verbindung zweier Klemmpunkte einer Klemmleiste bewirkt. Die Verwendung eines getakteten Netzteiles zur Spannungsversorgung (5 V, 24 V), hat den Vorteil, daß nur noch ein Netzteil erforderlich ist und überdies eine bessere Stabilisierung der Ausgangsspannung gewährleistet werden kann.

In dem internen Rechenwerk finden die gesamten logischen Verknüpfungen statt, also Berechnungen, Vergleiche von Soll- und Istwerten, zeitliches Schalten der elektrischen Verbraucher. Die 16 Ausgänge (Digitalausgänge) steuern über Relais die elektrischen Verbraucher an, z.B. Verdichter, Beleuchter. Zusätzlich verfügt die Zentraleinheit über einen nicht flüchtigen Speicher, einem sogenannten EEPROM, der auch bei Netzausfall seinen Programminhalt behält. Durch diese zentrale Verknüpfung aller Schaltvorgänge ist ein kontrollierter und somit wirtschaftlicher Energieeinsatz möglich. Außerdem können durch Erfassen der Verdichterschaltungen Ausfälle frühzeitig erkannt und weitergeleitet werden.

An das Steuergerät können insgesamt 16 Temperaturfühler angeschlossen sein, nämlich zwei für Außen- und Raumtemperatur und 14 Warnfühler, die nacheinander per Knopfdruck abgefragt werden können. Alle Temperaturen können zentral an dem Steuergerät abgefragt und angezeigt werden. Ist ein Warnzustand erreicht (noch keine Warnung, da verzögert), so leuchtet beim Abfragen des betreffenden Temperaturfühlers eine Diode. Die zentrale Beobachtung der Temperatur bringt einen großen Vorteil für den Kundendienst, falls im Maschinenraum Reparaturen durchgeführt werden. Durch die uneingeschränkte Belegung von Ein- und Ausgängen und durch die verbesserte elektronische Temperaturverarbeitung können gegenüber dem bisherigen Stand der Technik wesentlich mehr Steuerungsbzw. Überwachungsfunktionen bearbeitet werden.

Die aktuelle Uhrzeit wird kontinuierlich in das Steuergerät eingelesen, womit eine intern programmierte Software-Uhr überflüssig und nach einem Spannungsausfall immer der richtige Programmplatz erreicht wird.

Die korrekte Funktion des Mikroprozessors wird mit einer sogenannten Watch-Dog-Schaltung überwacht, d.h. bei Fehlverhalten des Prozessors wird das gespeicherte Programm neu in den Arbeitsspeicher eingelesen. Mit der erfindungsgemäß vorgesehenen eigenen Überwachung erhöht sich die Betriebssicherheit erheblich.

                                    auf
Zweckmäßig sind die Ausgänge über Schiene gesetzte Relais angeordnet, wodurch sich eine größere Flexibilität ergibt, da nur soviele Ausgangsrelais eingebaut werden, wie benötigt werden. Maximal können 18 Relais vorgesehen werden und zwar 16 zur Steuerung und 2 für die Sammelstörung (Plus- bzw. Tiefkühlung).

Nach einer weiteren Ausbildungsform des erfindungsgemäßen Steuergerätes kann an dieses ein Handprogrammiergerät angeschlossen werden. Damit können Änderungen einzelner Programmteile bzw. Sollwerte durchgeführt werden.

Überdies besteht am Steuergerät eine Anschlußmöglichkeit für einen automatischen Störungsmelder, z.B. ein digitales Übertragungssystem, und einen Störmeldedrucker. Über das Steuergerät können auch externe Störmeldungen (potentialfreie Kontakte) weitergeleitet werden.

In dem Steuergerät wird auf eine "echte" Lastabwurffunktion verzichtet, da man davon ausgeht, daß eine erhebliche Reduzierung der Spitzenlast durch die optimale Lastverteilung der Kältemaschinen eintritt. Ist jedoch eine absolute Maximumsbegrenzung erwünscht, so kann dies durch das erfindungsgemäße Erweiterungssystem geschen. Kostengünstig ist eine Realisierung allerdings nur dann, wenn vom Elektroversorgungsunternehmen ein Impulsgeber-Zähler eingebaut wird, von dem das Meßsignal und die Meßimpulse abgenommen werden können. Der Spitzenlastabwurf erfolgt dabei über das Prioritäts- und/oder Rotationsprinzip.

Mit dem erfindungsgemäßen Steuergerät kann auch ein Warntableau angesteuert werden, das dazu dient, Warnungen im Marktleiterbüro anzuzeigen.

In der Anzeige des erfindungsgemäßen Steuergerätes können der Fühlerplatz, Fühlertemperatur, Uhrzeit, Wochentag und die Funktion "Temperatur zu hoch" angezeigt werden. Die Uhrzeit und der Wochentag können dabei mit Tastern eingestellt werden. Überdies ist es möglich, die Umschaltung von Winter- auf Sommerzeit mittels eines Schalters zu vollziehen.

Im folgenden seien tabellarisch die Funktionen und Vorteile des erfindungsgemäßen Steuergerätes dargestellt:

| Wirkungspunkt | Verfahrensweise | Vorteile |
|---|---|---|
| Kühlmöbel | Erfassung von Raum- und Außentemperatur | Umgebungsbedingungen haben größeren Einfluß, als bei konventioneller Thermostatsteuerung |
| Kühlraum | Erfassung der tatsächlichen Laufzeit des Verdichters über Rückmeldung | |
| | Interne Berechnung der notwendigen Einschaltdauer | Verringerung der Einschalthäufigkeit |
| | | Längere Lebensdauer der Verdichter |
| | Verschiebung der Ein- und Ausschaltphasen gegeneinander | Vermeidung der Lastspitzen |
| | | Kein gleichzeitiges Einschalten der Verdichter |
| Nachtrollo bei Kühlregalen und Tiefkühlinseln | Pünktliches Hinauf- und Herunterfahren (Sommer-Winterzeit ist berücksichtigt) | Kälteverluste der Kühlmöbel werden vermieden |
| | | Wesentliche Energieersparnis |
| | Verringerung der Einschaltdauer, Temperaturkonstanthaltung | |
| Verkaufsraumbeleuchtung | Zei- und zonenweisees Ein- und Ausschalten | Nur volle Beleuchtung bei geöffnetem Laden |
| Boiler, Heißwassergeräte | Zeitliches Ein- und Ausschalten | Bedarfsgerechtes Einschalten (Pausenzeiten) |
| | | Am Wochenende und in der Nacht ganz ausgeschaltet |
| Umwälzpumpen | Zeitschaltung | Nur am Tag eingeschaltet |
| Lüftung/Heizung | Zeiteinschaltung | Außer einer gewissen Vorheizzeit nur am Tage eingeschaltet |

| Warnung | Verfahrensweise | Vorteile |
|---|---|---|
| Rahmenheizung (z.B.ATR,AGB) | Taktschaltung in der Nacht, je nach Raumbedingungen | Energieersparnis, auch durch geringeren Kältebedarf des Kühlmöbels |
| für Plus-Möbel und -Räume | Abfragen der Sicherheitskette im Steuerkreis des Verdichters. Schaltet der Verdichter während einer vorher definierten Zeit nicht ein, so erfolgt die Warnung | Registrierung von Verdichterausfällen, ohne das Thermometer im Kühlraum zu beobachten. |
| für TK-Möbel und -Räume | Abfrage der Sicherheitskette (wie vorher) | Registrierung von Verdichterausfällen, oft bevor der Schaden am Thermometer abgelesen werden könnte (Früherkennung) |
| Plus- und Tiefkühlmöbel | Warnfühler | Unzulässige Temperaturen werden erfasst (z.B. bei Kältemittelfüllungsmangel) |

Im folgenden sei die Erfindung anhand eines in zwei Figuren schematisch dargestellten Ausführungsbeispiels näher beschrieben.

Es zeigen:

Figur 1    schematischen Aufbau des Steuergerätes und
Figur 2    Bedienungsfeld.

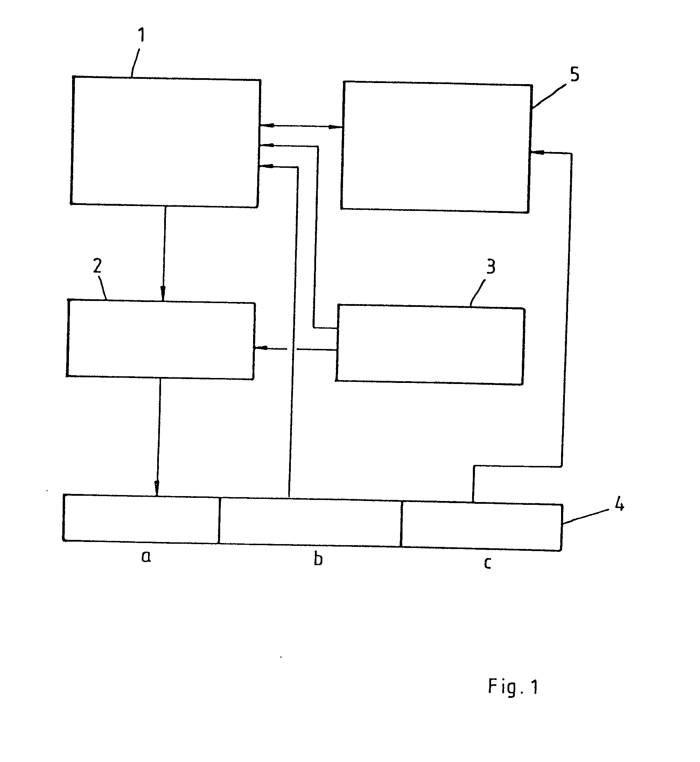

In Figur 1 ist der schematische Aufbau des erfindungsgemäßen Steuergerätes dargestellt. An eine Zentraleinheit 1 sind Ausgangsrelais 2 angeschlossen. Sowohl die Zentraleinheit 1 als auch die Ausgangsrelais 2 werden von einem getakteten Netzteil mit Spannung versorgt. Die Ausgangsrelais 2 sind auf Schiene gesetzt und mit einer Klemmleiste 4 verbunden, die mit Steuerausgängen a versehen ist. Über die Klemmleiste 4 können aber auch Rückmeldungen b direkt an die Zentraleinheit weitergegeben werden.

Die Zentraleinheit 1 steht überdies mit einem Bedienungsfeld 5 mit Anzeige in Verbindung. Dieses Bedienungsfeld ist über Klemmleiste 4 mit Temperaturfühler c verbunden.

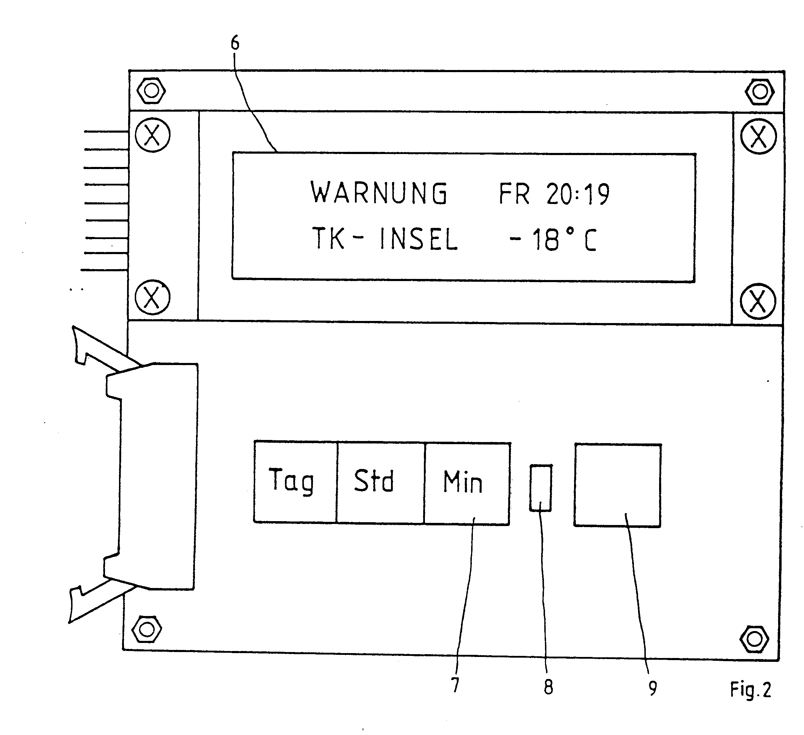

In Figur 2 ist das Bedienungsfeld im einzelnen beispielhaft dargestellt. Das Bedienungsfeld weist unter anderem eine LED-Anzeige 6 auf, auf der die Benennung des Fühlers, z.B. für die Tiefkühl-(TK) Insel, die Fühlertemperatur (-18°C), Warnung (blinkend falls Warnzustand), der Wochentag (Freitag,FR) und die Uhrzeit (20 Uhr, 19 Minuten) angezeigt werden. Das Bedienungsfeld ist überdies mit einer Datums- und Uhranzeige 7, einem Schalter 8 zur Umschaltung Winter/Sommerzeit und einem Umschalter 9 für die einzelnen Fühler ausgestattet.

Durch Betätigung des Umschalters 9 ist es möglich, die 16 Temperaturfühler nacheinander in die Anzeige zu holen. Befindet sich ein Fühler im Warnzustand, d.h. die Temperatur am Fühlerplatz ist größer als die vorgegebene Solltemperatur unter Berücksichtigung einer Verzögerungszeit, so erscheint die blinkende Anzeige "Warnung". Die im Warnzustand befindlichen Fühler werden ohne Betätigung des Umschalters nacheinander angezeigt.

Bei Fühlerbruch bzw. Fühlerkurzschluß blinkt ebenfalls die Anzeige "Warnung". In der Temperaturanzeige steht jedoch dann ein "?".

0228622

(K 105)

K 85/111
Sti/fl
11.12.1985

Patentansprüche

1. Steuergerät zur Minimierung der Verbrauchszahlen elektrischer Verbraucher in einem Supermarkt mit einer Zentraleinheit mit einem Mikroprozessor und einem damit verbundenen Bedienungsfeld mit Anzeige, dadurch gekennzeichnet, daß das Bedienungsfeld mit einem Mikroprozessor und je 16 frei belegbaren Ein- und Ausgängen ausgestattet ist und daß die Zentraleinheit mit einem getakteten Netzteil zur Spannungsversorgung verbunden ist.

2. Steuergerät nach Anspruch 1 gekennzeichnet durch 16 Temperaturfühler.

3. Steuergerät nach Anspruch 1 oder 2, dadurch gekennzeichnet, daß die Ausgänge mit auf Schiene gesetzte Relais angeordnet sind.

4. Steuergerät nach einem der Ansprüche 1 bis 3 gekennzeichnet durch zwei Relais für Sammelstörungen.

5. Steuergerät nach einem der Ansprüche 1 bis 4, dadurch gekennzeichnet, daß ein Handprogrammiergerät angeschlossen ist.

6. Steuergerät nach einem der Ansprüche 1 bis 5 gekennzeichnet durch eine Anschlußmöglichkeit für einen automatischen Störungsmelder.

Fig. 1

WARNUNG    FR 20:19

TK - INSEL    - 18°C

| Tag | Std | Min |
|-----|-----|-----|

Fig. 2

0228622